# EUROPÄISCHE PATENTSCHRIFT

(11) **EP 2 591 659 B1**
(45) Veröffentlichungstag und Bekanntmachung des Hinweises auf die Patenterteilung: **20.01.2016**
(21) Anmeldenummer: 12181432.1
(22) Anmeldetag: 23.08.2012
(51) Int. Cl.: A01D 43/08, A01F 25/18, A23K 3/02

(54) **Verfahren und Steuerung zum Ernten und Silieren von Futtermaterial**
Method and control for forage harvesting and ensilage
Procédé et control destinés à récolter et ensiler des matières fourragères

(30) Priorität: 08.11.2011 DE 102011117860
(43) Veröffentlichungstag der Anmeldung: 15.05.2013
(73) Patentinhaber: CLAAS Selbstfahrende Erntemaschinen GmbH, 33428 Harsewinkel (DE)
(72) Erfinder: Reinecke, Max, 33775 Versmold (DE); Hugenroth, Ludger, 48346 Ostbevern (DE); Grothaus, Hans-Peter, 33619 Bielefeld (DE); Steckel, Thilo, 33330 Gütersloh (DE); Schäperkötter, Christian, 33824 Werther (DE); Smolnik, Ivan, 33428 Harsewinkel (DE); Rusch, Christian, 33428 Harsewinkel (DE); Stricker, Christiane, 48231 Warendorf (DE)

(56) Entgegenhaltungen:
- EP-A1- 2 198 688
- DE-A1-102006 019 243
- DE-A1-102008 027 906

## Beschreibung

Die vorliegende Erfindung betrifft ein Verfahren zum Erzeugen von Futtermaterial, insbesondere von Silofutter, sowie ein dazu einsetzbares System von Maschinen, insbesondere eine Steuereinheit eines solchen Systems.

Zum Ernten von für die Tierernährung vorgesehenem Pflanzenmaterial werden herkömmlicherweise Feldhäcksler eingesetzt, die das Pflanzenmaterial, z.B. Mais, Rüben oder dergleichen bereits auf dem Feld zerkleinern. Das so erhaltene Häckselgut wird zu einem Silo transportiert und dort, z.B. durch wiederholtes Überfahren mit einem Ackerschlepper, verdichtet. Die Verdichtung sowie eine anschließende Umhüllung des Pflanzenmaterials mit einer luftdichten Folie soll den Kontakt des Pflanzenmaterials mit Luftsauerstoff minimieren und so geeignete Bedingungen für eine Milchsäuregärung schaffen, die das Pflanzenmaterial konserviert und das Wachstum von Schimmelpilzen und anderen Schadorganismen verhindert.

Für die Qualität des auf diese Weise erzeugten Silofutters ist eine schnelle Verarbeitung des Pflanzenmaterials, die den Kontakt mit Luftsauerstoff minimiert, von hoher Bedeutung. Eine schlechte Abstimmung der Verarbeitungskette, bei der die Ernteleistung höher ist als die Verdichtungsleistung, führt dazu, dass gehäckseltes Pflanzenmaterial in Kontakt mit Luftsauerstoff am Silo auf Halde liegt, bevor es verdichtet werden kann. Bei den meisten gegenwärtig verfügbaren Erntefahrzeugen wird der Motor im Feldeinsatz dauernd mit voller Leistung betrieben, und variabel ist allenfalls die Aufteilung dieser Leistung auf Fahrwerk und Häckselwerk. Der Leistungsbedarf des Häckselwerks hängt ab von der für die Weiterverarbeitung des Pflanzenmaterials am Silo erforderlichen Schnittlänge und vom Massenstrom des Pflanzenmaterials, der wiederum proportional ist zur Bestandsdichte des Pflanzenmaterials auf dem Feld und der Fahrgeschwindigkeit der Erntemaschine. Der Massendurchsatz des Pflanzenmaterials in der Erntemaschine ist daher keine willkürlich steuerbare Größe. Reduziert man die Ernteleistung durch Verringern der Anzahl eingesetzter Erntefahrzeuge, dann kann sichergestellt werden, dass das gehäckselte Pflanzenmaterial mit der Rate, mit der es am Silo angeliefert wird, dort auch verdichtet werden kann, doch werden dann im Allgemeinen Zeiten auftreten, in denen das Verdichterfahrzeug nichts zu tun hat oder unproduktiv arbeitet, was die Kosten der Futterproduktion unnötig erhöht.

Aus DE 10 2008 020 497 A1 ist ein Erntefahrzeug bekannt, das seinem Fahrer die Möglichkeit bietet, die Motorleistung im Feldeinsatz durch Umschalten zwischen verschiedenen Kennlinien zu variieren. So kann der Fahrer in Situationen, in denen der Durchsatz an Erntegut gering oder nicht vorhanden ist und das Einspeisen der vollen Motorleistung ins Fahrwerk nicht möglich oder nicht sinnvoll ist, insbesondere bei Wendemanövern, die Motorleistung reduzieren und dadurch Kraftstoff sparen. Im Erntebetrieb ist jedoch auch der Fahrer eines solchen Fahrzeugs gehalten, möglichst produktiv zu arbeiten, d.h. in möglichst kurzer Zeit eine möglichst große Fläche zu beernten und folglich den Motor mit der höchsten dafür sinnvoll brauchbaren Leistung zu betreiben.

Die EP 2 198 688 A1 offenbart die Merkmale des Oberbegriffs des Anspruchs 1 und beschreibt ein Verfahren zur Steuerung der Verdichtung eines landwirtschaftlichen Guts in einem Fahr- beziehungsweise Flachsilo, gemäß dem die Anzahl der Überfahrten zur Verdichtung des Guts durch ein Verdichtungsfahrzeug in Abhängigkeit von der Höhenabnahme des zu verdichtenden Guts gesteuert wird.

Aufgabe der vorliegenden Erfindung ist, Verfahren und Mittel bereitzustellen, die eine wirtschaftliche Produktion von Silofutter hoher Qualität ermöglichen.

Die Aufgabe wird zum einen gelöst durch ein Verfahren zum Erzeugen von Futtermaterial, bei dem mittels wenigstens eines Erntefahrzeugs Pflanzenmaterial auf dem Feld geerntet wird, das Pflanzenmaterial zu einem Silo transportiert wird und mittels einer Verdichtungsvorrichtung, insbesondere eines Verdichterfahrzeugs, verdichtet wird, mit den Schritten:
a) Vergleichen der Verdichtungsleistung der Verdichtungsvorrichtung mit der Ernteleistung des wenigstens einen Erntefahrzeugs;
b) Anpassen der Ernteleistung des wenigstens einen Erntefahrzeugs an die Verdichtungsleistung der Verdichtungsvorrichtung, wobei das Anpassen der Ernteleistung eine Anpassung der Leistung eines Antriebsmotors des Erntefahrzeugs beinhaltet.

Erfindungsgemäß kann auf diese Weise die Rate, mit der Pflanzenmaterial am Silo angeliefert wird, exakt an die Verdichtungsleistung angepasst werden. Ein unnötiger Kontakt des Pflanzenmaterials mit Luftsauerstoff vor dem Verdichten wird so vermieden, genauso wie eine mangelhafte Verdichtung, die sich ergeben kann, wenn versucht wird, zu große Mengen des Pflanzenmaterials auf einmal zu verdichten oder wenn die Verdichtung nicht mit der erforderlichen Sorgfalt ausgeführt wird. Weiterhin wird durch eine auf die Verdichtungsleistung angepasste Ernteleistung der zumindest einen Erntemaschine auch eine aus logistischer Sicht verbesserte Erntekette geschaffen, indem Stausituationen vor dem Silo vermieden werden. Vorteilhaft erfolgt die Anpassung der Ernteleistung durch Erzeugen eines Befehls zum Herauf- oder Herabsetzen der Ernteleistung des Erntefahrzeugs, wenn eine signifikante Abweichung der Ernteleistung gegenüber der Verdichtungsleistung vorliegt. Entspricht die Ernteleistung - innerhalb einer bestimmbaren Toleranz - der Verdichtungsleistung, so wird die Ernteleistung zweckmäßigerweise beibehalten, d.h. eine Anpassung erübrigt sich in diesem Fall.

In vorteilhafter Weise wird die Ernteleistung auf einen nicht verschwindenden Wert angepasst, d.h. die Erntemaschine erbringt stets einen zumindest über null liegenden Ernteertrag, um einen kontinuierlichen Erntebetrieb zu gewährleisten.

Um auch einen ökonomischen Treibstoffeinsatz bei der Futtermittelproduktion zu gewährleisten, beinhaltet das Anpassen der Ernteleistung eine Anpassung der Leistung eines Antriebsmotors des Erntefahrzeugs.

Ein besonders effizienter Betrieb ist möglich, wenn die Anpassung der Leistung ein Umschalten zwischen verschiedenen Betriebszuständen des Motors umfasst, die sich, wie insbesondere in DE 10 2008 020 497 A1 beschrieben durch ihre Leistung-Motordrehzahl-Kennlinie unterscheiden.

Eine Abschätzung der Ernteleistung kann zweckmäßigerweise basierend auf der Menge an zu verdichtendem Pflanzenmaterial am Silo vorgenommen werden, wobei eine Anpassung der Ernteleistung insbesondere dann vorgenommen wird, wenn eine langfristige Entwicklungstendenz dieser Menge festgestellt wird.

Im einfachsten Fall kann diese Abschätzung auf einer optischen Erfassung, insbesondere einer fotografischen Erfassung des Pflanzenmaterialvolumens mittels einer Kamera basieren. Wenn sich dabei beispielsweise ergibt, dass, wenn eine frische Fuhre Pflanzenmaterial angeliefert wird, die zuvor angelieferte noch nicht vollständig verdichtet ist, dann lässt dies darauf schließen, dass die Verdichtungsleistung nicht ausreicht und die Ernteleistung zurückgefahren werden sollte. Weitere Informationen wie etwa der aktuelle Pflanzenmaterialdurchsatz am Erntefahrzeug, sowie in der Vergangenheit liegende Pflanzenmaterialdurchsätze können zusätzlich berücksichtigt werden.

Die Kamera kann zweckmäßigerweise auf dem Verdichterfahrzeug montiert sein, um, dessen Bewegungen Leistung eines Antriebsmotors des Erntefahrzeugs beinhalten.

Ein besonders effizienter Betrieb ist möglich, wenn die Anpassung der Leistung ein Umschalten zwischen verschiedenen Betriebszuständen des Motors umfasst, die sich, wie insbesondere in DE 10 2008 020 497 A1 beschrieben durch ihre Leistung-Motordrehzahl-Kennlinie unterscheiden.

Eine Abschätzung der Ernteleistung kann zweckmäßigerweise basierend auf der Menge an zu verdichtendem Pflanzenmaterial am Silo vorgenommen werden, wobei eine Anpassung der Ernteleistung insbesondere dann vorgenommen wird, wenn eine langfristige Entwicklungstendenz dieser Menge festgestellt wird.

Im einfachsten Fall kann diese Abschätzung auf einer optischen Erfassung, insbesondere einer fotografischen Erfassung des Pflanzenmaterialvolumens mittels einer Kamera basieren. Wenn sich dabei beispielsweise ergibt, dass, wenn eine frische Fuhre Pflanzenmaterial angeliefert wird, die zuvor angelieferte noch nicht vollständig verdichtet ist, dann lässt dies darauf schließen, dass die Verdichtungsleistung nicht ausreicht und die Ernteleistung zurückgefahren werden sollte. Weitere Informationen wie etwa der aktuelle Pflanzenmaterialdurchsatz am Erntefahrzeug, sowie in der Vergangenheit liegende Pflanzenmaterialdurchsätze können zusätzlich berücksichtigt werden.

Die Kamera kann zweckmäßigerweise auf dem Verdichterfahrzeug montiert sein, um, dessen Bewegungen folgend, die Menge des zu verdichtenden Pflanzenmaterials aus unterschiedlichen Richtungen erfassen und so ihr Volumen besser abschätzen zu können.

Während sich von Natur aus relativ dichtes Erntegut wie etwa Mais- oder Rübenhäcksel dazu eignet, am Silo benachbart zu bereits verdichtetem Material aufgeschüttet und von dort vom Verdichterfahrzeug auf den Silo verschoben und verdichtet zu werden, ist dies bei Grasschnitt nicht der Fall. Hier ist gebräuchlich, frisches zu verdichtendes Material lagenweise von einem Transportfahrzeug direkt auf bereits im Silo verdichtetes Material aufzuschichten, um es dann an Ort und Stelle zu verdichten. Eine Abschätzung des Volumens des zu verdichtenden Ernteguts auf fotografischem Wege ist dann schwierig, da die Dicke der Schicht nicht sicher zu erfassen ist. Stattdessen kann jedoch die Ausdehnung einer mit dem zu verdichtenden Pflanzenmaterial bedeckten Oberfläche abgeschätzt werden.

Pflanzenmaterial kann zweckmäßigerweise als fertig verdichtet bewertet werden, wenn eine mit ihm bedeckte Oberflächeneinheit vom Verdichterfahrzeug eine vorgegebene Zahl von Malen befahren worden ist.

Um eine Verdichtung des Pflanzenmaterials mit geringem Zeit- und Kraftstoffeinsatz zu gewährleisten, kann die befahrbare Oberfläche des Silos in eine Mehrzahl von Oberflächeneinheiten unterteilt werden, für die jeweils die Zahl der Überfahrungen erfasst wird, sodass selten befahrene Oberflächeneinheiten identifiziert werden können, die bevorzugt befahren werden sollten, um eine gleichmäßige Verdichtung auf der gesamten Silooberfläche zu erzielen.

Wenn zu verdichtendes Pflanzenmaterial am Silo fuhrenweise abgeladen wird, sollte das Gewicht jeder Fuhre zweckmäßigerweise an eine das oben beschriebene Verfahren ausführende Steuereinheit gemeldet werden, um diese in die Lage zu versetzen, die Menge des am Silo vorhandenen zu verdichtenden Ernteguts, die wie oben beschrieben im Wesentlichen anhand ihres Volumens bzw. ihrer Oberfläche abschätzbar ist, in Beziehung zu setzen mit einem am Erntefahrzeug erfassten Massenfluss des Ernteguts.

Da in der Praxis der Silo, zu dem das Pflanzenmaterial transportiert wird, entfernt ist von dem Feld, auf dem es eingebracht wird, wird man in der Regel zusätzlich zu dem wenigstens einem Erntefahrzeug und Verdichterfahrzeug wenigstens ein Transportfahrzeug einsetzen, auf das das Pflanzenmaterial für den Transport zum Silo umgeladen wird. In diesem Fall ist es zweckmäßig, wenn die Steuereinheit auch die Transportleistung abschätzt, die Verdichtungsleistung mit der Transportleistung vergleicht und die Transportleistung anpasst, z.B. durch Vorgeben einer Transportgeschwindigkeit, wenn die Transportleistung signifikant von der Verdichtungsleistung abweicht. So kann eine zeitweilige Untätigkeit des Verdichterfahrzeugs wegen Fehlens von Pflanzenmaterial vermieden werden, bzw. das Pflanzenmaterial kann energiesparend langsam transportiert werden, um seine Ankunft am Silo zu verzögern, wenn dort noch ausreichend zu verarbeitendes Material vorhanden ist.

Erfindungsgegenstand ist ferner eine Steuereinheit zur Durchführung des oben beschriebenen Verfahrens mit Mitteln zum Vergleichen der Verdichtungsleistung und einer Kommunikationsschnittstelle zum Übermitteln wenigstens eines Befehls zum Heraufsetzen oder Herabsetzen der Ernteleistung an das Erntefahrzeug.

Ein weiterer Erfindungsgegenstand ist ein Computerprogrammprodukt mit Programmcodemitteln, die einen Computer, vorzugsweise einen Bordcomputer des Verdichterfahrzeugs, befähigen, das oben beschriebene Verfahren auszuführen bzw. als Steuereinheit zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung einer Anwendungssituation der Erfindung;
- Fig. 2: ein Blockdiagramm von im Rahmen der Erfindung kooperierenden Komponenten der Fahrzeuge aus Fig. 1;
- Fig. 3: eine schematische Ansicht eines Anzeigebildes auf einem Anzeigeinstrument des Ernte- oder Transportfahrzeugs; und
- Fig. 4: ein Anzeigebild auf einem Anzeigeinstrument des Verdichterfahrzeugs.

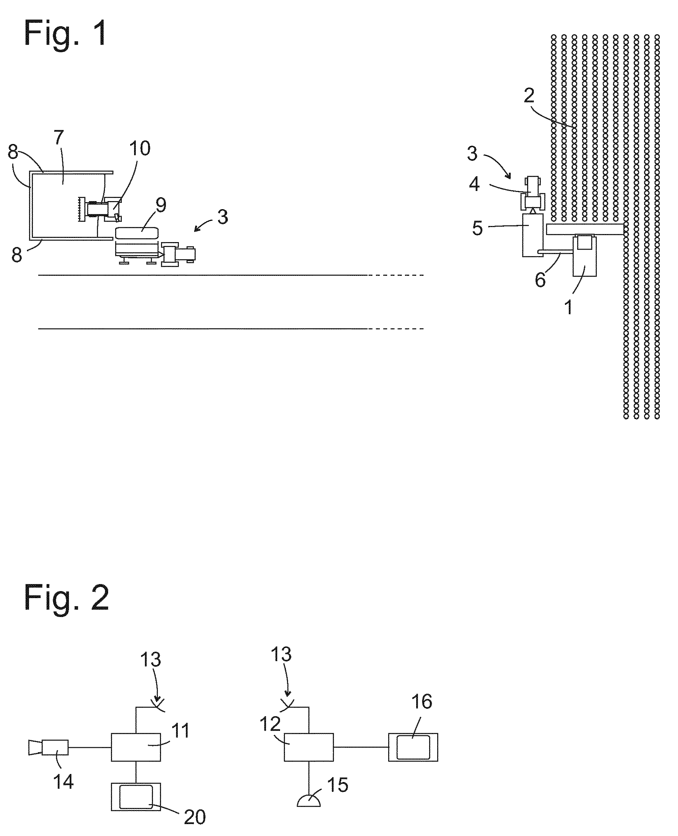

Fig. 1 zeigt eine schematische Darstellung einer typischen Anwendungssituation der vorliegenden Erfindung. Ein Erntefahrzeug, hier ein Feldhäcksler 1, ist im Begriff, einen Pfanzenbestand 2 auf einem Feld abzuernten. Der Feldhäcksler 1 wird begleitet von einem Transportfahrzeug 3, hier ein Traktor 4 mit Anhänger 5. Mittels eines Auswurfkrümmers 6 lädt der Feldhäcksler 1 gehäckseltes Pflanzenmaterial kontinuierlich auf den Anhänger 5 über.

Wenn die Ladekapazität des Transportfahrzeugs 3 voll ausgeschöpft ist, wird es zu einem Flachsilo 7 gefahren. Zu diesem Zeitpunkt sollte ein zweites Transportfahrzeug auf dem Feld bereitstehen, um die Position unter dem Auswurfkrümmer 6 einzunehmen, sodass der Feldhäcksler 1 seine Arbeit unterbrechungslos fortsetzen kann, während sich das beladene Transportfahrzeug 3 auf den Weg zu dem Flachsilo 7 macht.

Der Flachsilo 7 umfasst in an sich bekannter Weise eine Betonplatte, auf der drei Wände 8 jeweils im rechten Winkel miteinander verbunden sind. Das Transportfahrzeug 3 kippt seine Ladung auf einen Haufen 9 benachbart zum Flachsilo 7 ab, und ein Verdichterfahrzeug, hier ein Traktor mit Ladeschaufel, nimmt Pflanzenmaterial von dem Haufen 9 auf, verteilt es in dem Raum zwischen den Wänden 8 und überfährt dabei das bereits dort abgeladene Pflanzenmaterial. So wird eine dichte, von eingeschlossener Luft im Wesentlichen freie Silofüllung erhalten, die, wenn der Silo 7 fertig beladen ist, luftdicht abgedeckt und gären gelassen werden kann.

In der weiteren Beschreibung ist angenommen, dass ein Bordcomputer des Verdichterfahrzeugs 10 als zentrale Steuereinheit 11 (s. Fig. 2) für das erfindungsgemäße Verfahren fungiert. Es liegt jedoch auf der Hand, dass einige der im Folgenden beschriebenen Aufgaben dieser Steuereinheit 11 genauso gut auch von einem Bordcomputer 12 des Erntefahrzeugs 1 oder des Transportfahrzeugs 3 wahrgenommen werden können.

Jeweils in Zusammenhang mit dem Eintreffen einer Fuhre Pflanzenmaterial am Silo 7 empfängt die Steuereinheit 11 über eine Funkschnittstelle 13 eine Angabe über die Masse der Fuhre. Diese Angabe kann beispielsweise vom Bordcomputer des Transportfahrzeugs 3 herrühren und eine nominelle Tragfähigkeit des Anhängers 5 spezifizieren. Bevorzugt ist jedoch, dass der Bordcomputer 12 des Erntefahrzeugs 1 mit einem Sensor 15 zum Erfassen des Massenstroms des Pflanzenmaterials im Erntefahrzeug 1 verbunden ist und dieser Bordcomputer 12 das Gewicht der Fuhre durch Integrieren dieses Massenstroms über die zum Beladen des Anhängers 5 benötigte Zeitspanne erzeugt und per Funk an die Steuereinheit 11 übermittelt. Da die Entfernung zwischen dem Erntefahrzeug 1 und dem Verdichterfahrzeug 10 weiter sein kann als die Reichweite ihrer Funkschnittstellen 13, kann vorgesehen sein, dass beide über ein öffentliches Mobilfunknetz miteinander kommunizieren.

Die Steuereinheit 11 ist mit einer am Verdichterfahrzeug 10 montierten Kamera 14 verbunden, um von dieser Bilder des Haufens 9 zu empfangen. Während sich das Verdichterfahrzeug 10 auf dem Flachsilo 7 bewegt, um das Erntegut darin zu verdichten, erfasst die Kamera 14 den Haufen 9 aus unterschiedlichen Perspektiven, sodass die Steuereinheit 11 anhand der diversen Bilder des Haufens 9 dessen dreidimensionale Gestalt bzw. sein Volumen errechnen kann. In Kenntnis der gemeldeten Masse der Fuhre, aus der der Haufen 9 entstanden ist, schätzt die Steuereinheit 11 die Dichte des Pflanzenmaterials im Haufen 9 ab. Anhand dieser Dichte ist sie jederzeit in der Lage, die Restmasse des Haufens 9 abzuschätzen, auch wenn ein Teil des darin enthaltenen Materials abgeschoben und auf dem Silo 7 verteilt und verdichtet ist, und auf diesem Wege die Verdichtungsleistung abzuschätzen.

Eine wichtige Aufgabe der Steuereinheit 11 ist, die Ernteleistung des Erntefahrzeugs 1 mit der Verdichtungsleistung des Verdichterfahrzeugs 10 zu vergleichen, um nötigenfalls eine Anpassung der einen an die andere veranlassen zu können. Einer einfachen Ausgestaltung zufolge kann z.B. vorgesehen sein, dass die Steuereinheit 11 die Masse des Haufens 9 jeweils unmittelbar vor Anlieferung einer neuen Fuhre abschätzt und feststellt, dass die Ernteleistung höher ist als die Verdichtungsleistung, wenn diese Masse von einer Fuhre zur nächsten zunimmt.

Eine andere Möglichkeit ist, anhand von durch die Kamera 14 gelieferten Bildern des Haufens 9 die Masse zu ermitteln, die der Haufen 9 durch Abschieben von Material zum Silo 7 verliert, und diese Masse durch die Zeit zu dividieren, die das Verdichterfahrzeug 10 braucht, um dieses Material auf dem Silo 7 zu verteilen und zu verdichten. Eine so erhaltene Verdichterdichtungsleistung kann unmittelbar verglichen werden mit der vom Erntefahrzeug 1 gemessenen und über die Funkschnittstellen 13 an die Steuereinheit 11 gemeldeten Ernteleistung oder, im Falle des gleichzeitigen Einsatzes mehrerer Erntefahrzeuge 1, mit der Summe ihrer Ernteleistungen.

Wenn ein Vergleich von Ernteleistung und Verdichtungsleistung ergibt, dass die Verdichtungsleistung hinter der Ernteleistung zurückbleibt, sendet die Steuereinheit 11 über die Funkschnittstellen 13 einen Befehl zum Herabsetzen der Ernteleistung an den Bordcomputer 12 des Erntefahrzeugs 1. Das Ausmaß der Herabsetzung kann in dem Befehl spezifiziert sein; es kann auch fest vorgegeben sein, wobei im letzteren Fall der Befehl so oft gesendet wird, wie erforderlich, um die Ernteleistung an die Verdichtungsleistung anzupassen.

Der Bordcomputer 12 kann eingerichtet sein, um die Leistung des Motors des Erntefahrzeugs 1 unmittelbar anhand eines solchen Befehls zu steuern.

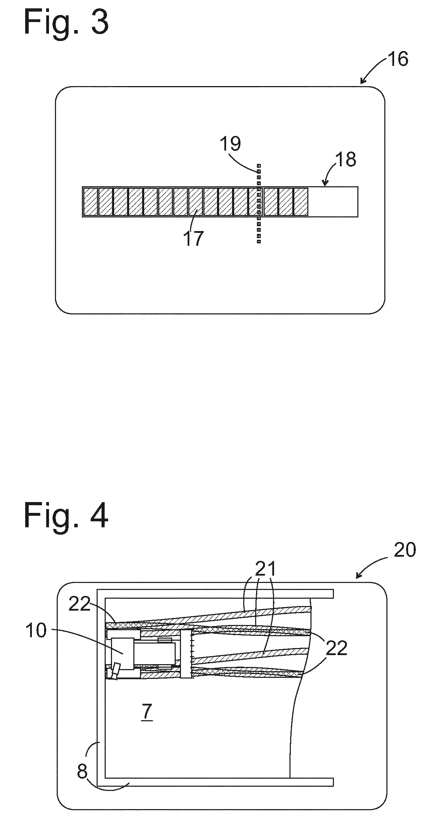

Alternativ kann vorgesehen sein, dass der Bordcomputer 12 lediglich eine Anzeigeeinheit 16 am Armaturenbrett des Erntefahrzeugs 1 anhand des Befehls steuert. Ein exemplarisches Anzeigebild der Anzeigeeinheit 16 ist in Fig. 3 gezeigt. Ein längenveränderlicher Balken 17 auf einer Skala 18 zeigt den aktuellen vom Sensor 15 erfassten Massenfluss des Pflanzenmaterials an. Wenn der Balken 17 die gesamte Skala 18 ausfüllt, so entspricht dies dem bei dem Erntefahrzeug 1 maximal erreichbaren Pflanzenmaterialfluss. Eine Markierung 19 auf der Skala 18 zeigt den in einem Befehl der Steuereinheit 11 spezifizierten Pflanzenmaterialfluss an, der eingestellt werden sollte, um die Ernteleistung an die Verdichtungsleistung anzupassen. Auf das Eintreffen eines solchen Befehls kann der Fahrer z.B. durch ein akustisches Signal, Blinken der Markierung 19 oder dergleichen aufmerksam gemacht werden. Die Möglichkeit und die Verantwortung, zu entscheiden, ob dem Befehl der Steuereinheit 11 folge geleistet wird, bleibt hier beim Fahrer des Erntefahrzeugs 1. Die von der Steuereinheit 11 gelieferten Befehle ermöglichen es ihm allerdings, die Motorleistung des Erntefahrzeugs 1 jederzeit genau so zu regeln, dass nicht schneller geerntet wird, als das am Silo 7 angelieferte Erntegut dort verdichtet werden kann. So kann die Zeit, die zwischen der Ernte des Pflanzenbestands 2 und der Verdichtung am Silo 7 verstreicht, minimiert werden.

Wenn der Bestand bereits geerntet und auf dem Transportfahrzeug 3 unterwegs zum Silo 7 ist, kann die Steuereinheit 11 durch entsprechende Befehle an das Transportfahrzeug 3 dieses veranlassen, seine Geschwindigkeit so zu steuern, dass die Fuhre genau dann am Silo 7 ankommt, wenn die vorgehende verarbeitet ist und mit dem Verdichten der neuen Fuhre sofort begonnen werden kann. Auch dem Fahrer des Transportfahrzeugs 3 kann durch ein Anzeigebild ähnlich dem in Fig. 3 gezeigten sowohl seine aktuelle Geschwindigkeit als auch eine von der Steuereinheit 11 spezifizierte Soll-Geschwindigkeit angezeigt werden. Da der Fahrer des Transportfahrzeugs 3 insbesondere beim Fahren auf öffentlichen Wegen Geschwindigkeitswünschen der Steuereinheit 11 nicht immer und in vollem Umfang entsprechen kann, kann die Steuereinheit 11 anstelle der Geschwindigkeit oder ergänzend zu dieser auch eine gewünschte Ankunftszeit am Silo 7 an das Transportfahrzeug 3 signalisieren. Denkbar ist auch, dass die Steuereinheit 11 anhand von vom Transportfahrzeug laufend gelieferten Positionsdaten, z.B. GPS-Daten, den Weg des Transportfahrzeugs vom Feld zum Silo 7 überwacht und die gewünschte Geschwindigkeit des Transportfahrzeugs 3 fortlaufend aktualisiert, während dieses unterwegs ist.

Die Steuereinheit 11 verwendet ferner GPS-Daten, um die Position des Verdichterfahrzeugs 10 zu ermitteln und relativ zum Silo 7 auf einer Anzeigeeinheit 20 des Verdichterfahrzeugs 10 darzustellen, wie in Fig. 4 gezeigt. Anhand fortlaufend empfangener GPS-Daten, ggf. unterstützt durch Überwachung von Lenkradbewegungen des Verdichterfahrzeugs 10, verfolgt die Steuereinheit 11 den vom Verdichterfahrzeug 10 zurückgelegten Weg auf dem Silo 7 und zeigt diesen auf der Anzeigeeinheit 20 an, wobei die Farbe, in der jeweils ein Abschnitt der Silooberfläche dargestellt wird, davon abhängt, wie oft dieser seit dem letzten Verteilen von frischem Erntegut auf der Silooberfläche überfahren worden ist. In der Darstellung der Fig. 4 sind einzelne aus dem Hin- und Herfahren auf der Silooberfläche resultierende Reifenspuren noch erkennbar, und jeweils einfach überfahrene Bereiche 21 sind einfach schraffiert, doppelt überfahrene Bereiche 22 kreuzschraffiert dargestellt. So kann der Fahrer auf der Anzeigeeinheit 20 jederzeit erkennen, wo er das Verdichterfahrzeug 10 hinlenken muss, um eine ausreichende und homogene Verdichtung - d.h. eine gleiche Mindestzahl von Überfahrungen - auf der gesamten Oberfläche des Silos 7 zu erreichen.

Einer Weiterbildung zufolge könnte der Bordcomputer 11 des Verdichterfahrzeugs 10 auch aktiv in dessen Lenkung eingreifen, um anhand der gesammelten Daten über die bisherige Bewegung des Verdichterfahrzeugs 10 dieses gezielt auf jene Bereiche der Silooberfläche zu lenken, die noch nicht oft genug überfahren worden sind, um ausreichend verdichtet zu sein.

Sobald diese vorgegebene Mindestzahl von Überfahrungen auf der gesamten Oberfläche, abgesehen eventuell von einem vorgegebenen Restprozentsatz, erreicht ist, kann der Fahrer, beispielsweise durch ein akustisches Signal, darauf aufmerksam gemacht werden, dass es an der Zeit ist, frisches Erntegut vom Haufen 9 zu holen und auf den Silo 7 aufzuschieben. Sobald dies geschieht, wird die Zählung der Überfahrungen auf der gesamten Oberfläche des Silos 7 zurückgesetzt und von Neuem begonnen.

Bei bestimmten Arten von Erntegut, insbesondere bei Grasschnitt, kann es zweckmäßig sein, das Erntegut nicht vom Transportfahrzeug auf den zum Silo 7 benachbarten Haufen 9 abzuladen, sondern es unmittelbar vom Transportfahrzeug 3 aus auf der Silooberfläche zu verteilen. Da es keinen vom Silo 7 getrennten Haufen gibt, kann die Verdichtungsleistung auch nicht anhand von dessen Größenabnahme abgeschätzt werden. Eine Abschätzung der Verdichtungsleistung ist dennoch bereits möglich, bevor die aufgebrachte Fuhre vollständig verdichtet ist. Dazu wird zunächst unmittelbar nach Abladen der Fuhre auf dem Silo 7 mit Hilfe der Kamera 14 erfasst, welche Bereiche der Silooberfläche von dem frischen Erntegut bedeckt sind, und der Flächeninhalt dieser frisch bedeckten Bereiche wird abgeschätzt. Dann wird wie anhand von Fig. 4 beschrieben der vom Verdichterfahrzeug 10 auf dem Silo 7 zurückgelegte Weg verfolgt, und der Anteil fertig verdichteter, d.h. die vorgegebene Zahl von Malen befahrener Flächen an der zuvor abgeschätzten Oberfläche der frisch bedeckten Bereiche wird ermittelt. Aus dem Verhältnis dieser Flächen und der zuvor vom Transportfahrzeug oder vom Erntefahrzeug an die Steuereinheit 11 übermittelten Masse der jüngsten Fuhre kann die Verdichtungsleistung abgeschätzt werden und das Ergebnis mit der Ernteleistung verglichen werden.

### Bezugszeichen

- 1: Erntefahrzeug, Feldhäcksler
- 2: Pflanzenbestand
- 3: Transportfahrzeug
- 4: Traktor
- 5: Anhänger
- 6: Auswurfkrümmer
- 7: Flachsilo
- 8: Wand
- 9: Haufen
- 10: Verdichterfahrzeug
- 11: Steuereinheit
- 12: Bordcomputer
- 13: Funkschnittstelle
- 14: Kamera
- 15: Massenflusssensor
- 16: Anzeigeeinheit
- 17: Balken
- 18: Skala
- 19: Markierung
- 20: Anzeigeeinheit
- 21: 1. überfahrener Bereich
- 22: 2. überfahrener Bereich

## Patentansprüche

1. Verfahren zum Erzeugen von Futtermaterial, bei dem mittels wenigstens eines Erntefahrzeugs (1) Pflanzenmaterial (2) auf dem Feld geerntet wird, das Pflanzenmaterial zu einem Silo (7) transportiert wird und mittels einer Verdichtungsvorrichtung, insbesondere eines Verdichterfahrzeugs (10), verdichtet wird, mit den Schritten:
a) Vergleichen der Verdichtungsleistung der Verdichtungsvorrichtung mit der Ernteleistung des wenigstens einen Erntefahrzeugs (1);
b) Anpassen der Ernteleistung des wenigstens einen Erntefahrzeugs (1) an die Verdichtungsleistung der Verdichtungsvorrichtung, **dadurch gekennzeichnet, dass** das Anpassen der Ernteleistung eine Anpassung der Leistung eines Antriebsmotors des Erntefahrzeugs (10) beinhaltet.

2. Verfahren nach Anspruch 1, **dadurch gekennzeichnet, dass** die Verdichtungsvorrichtung als Verdichterfahrzeug (10) ausgeführt ist

3. Verfahren nach Anspruch 2, **dadurch gekennzeichnet, dass** die Anpassung der Leistung ein Umschalten zwischen verschiedenen Betriebszuständen des Motors umfasst, die sich durch ihre Leistung-Motordrehzahl-Kennlinie unterscheiden.

4. Verfahren nach Anspruch 1, 2 oder 3, **dadurch gekennzeichnet, dass** eine Abschätzung der Ernteleistung basierend auf der Menge (9) an zu verdichtendem Pflanzenmaterial am Silo (7) vorgenommen wird und eine Anpassung der Ernteleistung vorgenommen wird, wenn eine langfristige Entwicklungstendenz dieser Menge festgestellt wird.

5. Verfahren nach Anspruch 4, **dadurch gekennzeichnet, dass** zum Abschätzen der Menge an zu verdichtendem Pflanzenmaterial das Volumen der Menge (9) fotografisch, insbesondere mittels einer Kamera (14) des Verdichterfahrzeugs (10), erfasst wird.

6. Verfahren nach Anspruch 4, **dadurch gekennzeichnet, dass** zum Abschätzen der Menge an zu verdichtendem Pflanzenmaterial eine mit dem zu verdichtenden Pflanzenmaterial bedeckte Oberfläche abgeschätzt wird.

7. Verfahren nach einem der vorhergehenden Ansprüche, **dadurch gekennzeichnet, dass** Pflanzenmaterial als verdichtet bewertet wird, wenn eine mit ihm bedeckte Oberflächeneinheit vom Verdichterfahrzeug (10) eine vorgegebene Zahl von Malen befahren worden ist.

8. Verfahren nach Anspruch 7, **dadurch gekennzeichnet, dass** die befahrbare Oberfläche des Silos (7) in eine Mehrzahl von Oberflächeneinheiten unterteilt wird und dass für jede Oberflächeneinheit die Zahl der Überfahrungen erfasst wird.

9. Verfahren nach einem der vorhergehenden Ansprüche, **dadurch gekennzeichnet, dass** zu verdichtendes Pflanzenmaterial am Silo (7) fuhrenweise abgeladen und das Gewicht jeder Fuhre gemeldet wird.

10. Verfahren nach einem der vorhergehenden Ansprüche, **dadurch gekennzeichnet, dass** die Ernteleistung anhand des Massenflusses des Pflanzenmaterials am Erntefahrzeug (1) abgeschätzt wird.

11. Verfahren nach einem der vorhergehenden Ansprüche, **dadurch gekennzeichnet, dass** zum Transportieren zum Silo (7) das Pflanzenmaterial von dem wenigstens einen Erntefahrzeug (1) auf wenigstens ein Transportfahrzeug (3) umgeladen wird, mit den weiteren Schritten:
c) Abschätzen der Transportleistung;
d) Vergleichen der Verdichtungsleistung der Verdichtungsvorrichtung mit der Transportleistung;
e) Anpassen der Transportleistung, wenn diese signifikant von der Verdichtungsleistung abweicht.

12. Steuereinheit zur Durchführung des Verfahrens nach einem der vorhergehenden Ansprüche, mit Mitteln (11) zum Vergleichen der Verdichtungsleistung und einer Kommunikationsschnittstelle (13) zum Übermitteln wenigstens eines Befehls zum Heraufsetzen oder Herabsetzen der Ernteleistung an das Erntefahrzeug (1).

13. Computerprogramm-Produkt mit Programmcode-Mitteln, die einen Computer, insbesondere einen Bordcomputer (11) eines Verdichterfahrzeugs (10), befähigen, das Verfahren nach einem der Ansprüche 1 bis 11 auszuführen und/oder als Steuereinheit nach Anspruch 12 zu arbeiten.

14. Erntefahrzeug (1) zur Durchführung des Verfahrens nach einem der Ansprüche 1 bis 11, mit einer Kommunikationsschnittstelle (13) zum Empfangen eines Befehls zum Heraufsetzen oder Herabsetzen der Ernteleistung und Steuermitteln (12) zum Steuern des Motors oder eines Anzeigeinstruments (16) anhand des Befehls.

## Claims

1. A method of producing fodder material in which plant material (2) is harvested on the field by means of at least one harvesting vehicle (1), the plant material is transported to a silo (7) and compressed by means of a compression device, in particular a compressor vehicle (10), comprising the steps:
a) comparing the compression output of the compression device to the harvesting output of the at least one harvesting vehicle (1); and
b) adapting the harvesting output of the at least one harvesting vehicle (1) to the compression output of the compression device, **characterised in that** the step of adapting the harvesting output includes adaptation of the power of a drive engine of the harvesting vehicle (1).

2. A method according to claim 1 **characterised in that** the compression device is in the form of a compressor vehicle (10).

3. A method according to claim 2 **characterised in that** adaptation of the power includes switching over between different operating conditions of the engine, which differ by virtue of the power output-engine speed characteristic.

4. A method according to claim 1, claim 2 or claim 3 **characterised in that** an estimate of the harvesting output is effected based on the amount (9) of plant material to be compressed at the silo (7) and adaptation of the harvesting output is effected when a long-term development trend in respect of that amount is detected.

5. A method according to claim 4 **characterised in that** to estimate the amount of plant material to be compressed the volume of the amount (9) is detected photographically, in particular by means of a camera (14) of the compressor vehicle (10).

6. A method according to claim 4 **characterised in that** to estimate the amount of plant material to be compressed a surface covered with the plant material to be compressed is estimated.

7. A method according to one of the preceding claims **characterised in that** plant material is assessed as compressed when the compressor vehicle (10) has driven over a surface unit covered with plant material a predetermined number of times.

8. A method according to claim 7 **characterised in that** the surface of the silo (7), which can be driven over, is subdivided into a plurality of surface units and the number of times that it is driven over is detected for each surface unit.

9. A method according to one of the preceding claims **characterised in that** plant material to be compressed is discharged in loads at the silo (7) and the weight of each load is reported.

10. A method according to one of the preceding claims **characterised in that** the harvesting output is estimated on the basis of the mass flow of the plant material at the harvesting vehicle (1).

11. A method according to one of the preceding claims **characterised in that** for transport to the silo (7) the plant material is transloaded from the at least one harvesting vehicle (1) on to at least one transport vehicle (3), comprising the further steps:
c) estimating the transport output;
d) comparing the compression output of the compression device to the transport output; and
e) adapting the transport output when it deviates significantly from the compression output.

12. A control unit for carrying out the method according to one of the preceding claims comprising means (11) for comparing the compression output and a communication interface (13) for transmitting at least one command for increasing or decreasing the harvesting output to the harvesting vehicle (1).

13. A computer program product with program code means which enable a computer, in particular an on-board computer (11), of a compressor vehicle (10) to carry out the method according to one of claims 1 to 11 and/or to operate as a control unit according to claim 12.

14. A harvesting vehicle (1) for carrying out the method according to one of claims 1 to 11 comprising a communication interface (13) for receiving a command for increasing or decreasing the harvesting output and control means (12) for controlling the engine or a display instrument (16) by means of the command.

## Revendications

1. Procédé de fabrication de matière fourragère, dans lequel de la matière végétale (2) est récoltée dans le champ au moyen d'au moins un véhicule de récolte (1), la matière végétale est transportée à un silo (7) et compactée au moyen d'un dispositif de compactage, en particulier d'un véhicule compacteur (10), comprenant les étapes suivantes :
a) comparaison du rendement de compactage du dispositif de compactage avec le rendement de récolte du au moins un véhicule de récolte (1) ;
b) adaptation du rendement de récolte du au moins un véhicule de récolte (1) au rendement de compactage du dispositif de compactage, **caractérisé en ce que** l'adaptation du rendement de récolte englobe une adaptation du rendement d'un moteur d'entraînement du véhicule de récolte (10).

2. Procédé selon la revendication 1, **caractérisé en ce que** le dispositif de compactage est conçu sous la forme d'un véhicule compacteur (10).

3. Procédé selon la revendication 2, **caractérisé en ce que** l'adaptation de la puissance comprend une commutation entre différents états de fonctionnement du moteur, lesquels se différencient par leur courbe caractéristique rendement-régime du moteur.

4. Procédé selon la revendication 1, 2 ou 3, **caractérisé en ce qu'**une estimation du rendement de récolte est effectuée sur la base de la quantité (9) de matière végétale à compacter dans le silo (7), et une adaptation du rendement de récolte est effectuée si une tendance d'évolution à long terme de cette quantité est constatée.

5. Procédé selon la revendication 4, **caractérisé en ce que**, pour estimer la quantité de matière végétale à compacter, le volume de la quantité (9) est enregistré, en particulier au moyen d'une caméra (14) du véhicule compacteur (10).

6. Procédé selon la revendication 4, **caractérisé en ce que**, pour estimer la quantité de matière végétale à compacter, une surface recouverte par la matière végétale à compacter est estimée.

7. Procédé selon une des revendications précédentes, **caractérisé en ce que** la matière végétale est considérée comme compactée lorsqu'une unité de surface recouverte par celle-ci a été parcourue un nombre de fois prédéfini par le véhicule compacteur (10).

8. Procédé selon la revendication 7, **caractérisé en ce que** la surface du silo (7) pouvant être parcourue est divisée en une pluralité d'unités de surface, et **en ce que** le nombre de passages est enregistré pour chaque unité de surface.

9. Procédé selon une des revendications précédentes, **caractérisé en ce que** de la matière végétale à compacter est déchargée au silo (7) par cargaisons, et le poids de chaque cargaison est communiqué.

10. Procédé selon une des revendications précédentes, **caractérisé en ce que** le rendement de récolte est estimé à l'aide du flux massique de matière végétale au niveau du véhicule de récolte (1).

11. Procédé selon une des revendications précédentes, **caractérisé en ce que**, pour le transport au silo (7), la matière végétale est transbordée du au moins un véhicule de récolte (1) à au moins un véhicule de transport (3), avec les étapes suivantes :
c) estimation du rendement de transport ;
d) comparaison du rendement de compactage du dispositif de compactage avec le rendement de transport ;
e) adaptation du rendement de transport lorsque celui-ci s'écarte significativement du rendement de compactage.

12. Unité de commande pour la réalisation du procédé selon une des revendications précédentes, comprenant des moyens (11) pour comparer le rendement de compactage et comprenant une interface de communication (13) pour transmettre au véhicule de récolte (1) au moins une instruction pour augmenter ou diminuer le rendement de récolte.

13. Produit de programme informatique comprenant des moyens de code de programme qui permettent à un ordinateur, en particulier à un ordinateur de bord (11) d'un véhicule compacteur (10), d'exécuter le procédé selon une des revendications 1 à 11 et/ou de fonctionner comme unité de commande selon la revendication 12.

14. Véhicule de récolte (1) pour la réalisation du procédé selon une des revendications 1 à 11, comprenant une interface de communication (13) pour recevoir une instruction pour augmenter ou diminuer le rendement de récolte, et comprenant des moyens de commande (12) pour commander le moteur ou un instrument d'affichage (16) à l'aide de l'instruction.
